# EUROPEAN PATENT SPECIFICATION

(11) **EP 0 595 344 B1**
(45) Date of publication and mention of the grant of the patent: **22.04.1998**
(21) Application number: 93117574.9
(22) Date of filing: 29.10.1993
(51) Int. Cl.: H01R 39/06, H02K 7/08, G10F 1/06

(54) **Small brush-use DC motor and music device.**
Kleiner Gleichstrommotor mit Bürsten und Musikvorrichtung.
Petit moteur à courant continu avec balais et appareil de musique.

(30) Priority: 29.10.1992 JP 291431/92; 12.11.1992 JP 302382/92; 25.11.1992 JP 81148/92
(43) Date of publication of application: 04.05.1994
(73) Proprietor: KABUSHIKI KAISHA SANKYO SEIKI SEISAKUSHO, Suwa-gun Nagano-ken (JP)
(72) Inventor: Orii, Makoto, c/o Kabushiki Kaisha Sankyo Seiki, Suwa-gun, Nagano (JP); Hayashi, Katsuhiko, c/o Kabushiki K. Sankyo Seiki, Suwa-gun, Nagano (JP)
(74) Representative: Henkel, Feiler, Hänzel

(56) References cited:
- CH-A- 313 790
- DE-A- 1 622 882
- DE-A- 4 110 971
- FR-A- 1 470 324
- GB-A- 777 664
- US-A- 2 489 149
- US-A- 5 089 736

## Description

### BACKGROUND OF THE INVENTION

### Filed of the invention

The present invention relates to a small brush-use DC motor and to a music device employing such motor.

### Related Art

A conventional small brush-use DC motor is disclosed in Unexamined Japanese Utility Model Publication No. Sho. 64-54754, for example. The DC motor is constructed as shown in Fig. 14.

In Fig. 14, reference numeral 71 designates a stator case 71, shaped like a cup. A tubular portion 71b has a tubular portion 71b in the central part of the bottom thereof. The tubular portion 71b passes through the bottom of the stator case 71.

A first bearing 80 is fitted into and fixed to the tubular portion 71b. A side plate 73 is pressed to or press fitted to the open end (the top side thereof in the drawing) of the stator case 71. A brush holder 74 is fastened on the inner side of the side plate 73 by means of screws or resin molding.

A cap-like portion 74a is protruded upward (toward the side plate 73) in the central part of the brush holder 74. A second bearing 81 is fit into and fixed to the tubular portion 74a.

The first and second bearings 80 and 81 cooperate to rotatably support a rotary shaft 82 of an armature 76.

An armature core 84 with a winding 83 thereon and a commutator unit 85, both being fit to the rotary shaft 82, make up the armature 76. A ring-like magnet 72 is disposed in opposition to the peripheral outer surface of the armature core 84, with a predetermined gap therebetween. The ring-like magnet 72 is fastened to the peripheral inner surface of the cup-like stator case 71.

A contact part 75b, which is formed at the distal end of the brush 75, comes in contact with the peripheral surface of the commutator unit 85 in a slidable fashion. The base of the brush 75 is fastened to the brush holder 74. The brush 75 has a terminal 75a with a hole, not shown. The hole of the terminal 75a is fit into the tubular portion 74a of the brush holder 74, and positioned at the location where the hole of the terminal 75a is fitted and the tubular portion 74a is thermally deformed and welded.

A window hole 71a is formed in the stator case 71. The terminal 75a of the brush 75 passes through the window hole 71a to exterior. A collar 86 is fit to the lower part of the rotary shaft 82, which is located below the armature core 84.

The terminal 75a of the brush 75 is connected to a power source, not shown. The commutator unit 85, which is brought into press contact with the contact part 75b of the brush 75, is mounted thereon. The small DC motor is driven to rotate by changing the direction and phase of a current fed from the brush 75.

In the DC motor thus constructed, a clearance is present between the rotary shaft and the first and second bearings. The clearance possibly allows the related part, or the rotary shaft, to move in the radial direction. When the motor is driven, the play of the related part will create motor noise.

An attempt to reduce the play is one of the ways to reduce the motor noise. However, this attempt creates another problem. That is, when the play is reduced, the rotary shaft comes in area contact with the first and second bearings. The rotation resistance of the rotary shaft when it rotates being supported by the first and second bearings increases.

The small brush-use DC motor of the type in which the tubular-shaped commutator unit is used, generates low noise and has good motor performances. However, this type motor is disadvantageous in that because of the tubular shape of the commutator unit, the tubular commutator unit occupies a larger space expanding in the longitudinal direction.

In this type of the DC motor, the brush-to-brush spatial distance is narrower than the width (diameter) of the commutator unit. For this reason, in assembling the motor, the commutator unit must be inserted in the narrow brush-to-brush space. This makes the assembling work difficult.

A small brush-use DC motor of the type in which the commutator unit is of the disk type, is also known. This type of the DC motor, unlike the DC motor using the tubular commutator, is free of the difficulty of the assembling work, but it is disadvantageous in that the disk-like commutator unit occupies a larger space expanding in the radial direction than the tubular commutator unit.

In the motor-driven music box disclosed in Examined Japanese Utility Model Publication No. Hei. 1-21357, the rotary drum, the vibrating plates, the reduction gear train, and the DC motor are supported by a frame as the base board of the music box.

The gears of the reduction gear train are rotatably supported in a manner that the axes of the gears are inserted into indentations or bearings. The DC motor is laterally mounted on the frame such that the rotor shaft is in parallel with the frame, and the base plate of the motor is fastened to the frame by means of screws.

As described above, to mount the DC motor on the frame, the motor base plate must be fastened to the frame by means of screws, while to assemble the reduction gears into the frame since, the gears are merely put down into the indentations or bearings. In this respect, the DC motor mounting work is more difficult than the gear assembling work.

From DE 41 10 971 A1 there is known a brush-use DC motor for driving auxiliary devices in an automobile. This motor has a stator case magnet arranged at the inner circumference of a cylindrical housing and a rotor core with a winding which rotot core is rotatably supported in the housing at both exail ends. The magnet and the rotor winding are staggered in the direction of an axis of rotation so that the rotor is biased towards brushes held in contact with a commutator provided at one end of the rotor due to the resulting magnetic force. The contact poles of the commutator of this motor are arranged either conically or coplanar in a plane orthogonal to the axis of rotation.

A small motor for a synchronous clock or the like is described in GB-A-777664 and it is known from this motor that conical bearings receiving conically shaped ends of a rotary shaft with different conical angles for the bearing and the end of the shaft can be used as a bearing structure.

### SUMMARY OF THE INVENTION

It is an object of the present invention to provide a small brush-use motor and a music device, in which a play of the rotary shaft of the motor is removed, in which a motor noise is reduced and which provides facilitated assembling.

According to the present invention there is provided a small brush-use DC motor comprising: a stator member including a stator case in which a magnet is disposed; a rotor member including a rotor core on which a coil is wound, a magnetic center of the rotor core being staggered with respect to a magnetic center of the magnet; a commutator unit having a conical part on which a commutator is arranged, the commutator unit rotating together with the rotor member as a single unit assembly; brushes held in such a manner that the brushes are brought into contact with the commutator under a predetermined pressure; a support shaft fixed to the stator case and having a distal end part shaped substantially conical; and a first bearing portion which is a substantially conically shaped hole provided in the commutator unit and receiving said conical end of the support shaft, thereby rotatably supporting said single unit assembly of the rotor member and the commutator unit.

According to the present invention there is also provided a music device comprising: a rotary drum having a plurality of pins arranged in the surface thereof in accordance with a music piece; a plurality of vibrating plates sounded by the pins of the rotary drum; a small brush-use DC motor according to the invention, for driving the rotary drum through a reduction gear train; and a frame for supporting the rotary drum, the vibrating plates, the reduction gear train, and the small brush-use DC motor, wherein the small brush-use DC motor being supported by the frame in such a manner that the supporting shaft for supporting the rotor member of the small brush-use DC motor and the commutator unit is orthogonal to the frame to support the small brush-use DC motor.

Preferred embodiments of the small brush-use motor and of the music device are defined in the subclaims.

According to the present invention, in the brush-use DC motor, the clearance between the shaft and the bearing is reduced to a minimum. And those contact with each other linearly. The armature can be turned smoothly, and the motor noise is reduced.

With the conical shape of the commutator, the space of the motor assembly can be reduced in the axial direction when compared with the conventional one. The result is to reduce noise, to be flattened in shape, and to provide an easy assembling work.

According to the present invention, the music boxes employ the small brush-use DC motors of the embodiments of the invention. Those DC motors as the drive sources for the rotary drums are each mounted on the frame as referred to in one embodiment. The shafts of the DC motors are disposed orthogonal to the frames. Therefore, the DC motors can be readily assembled by merely putting the shafts into the bearing indentations of the frames. Therefore, there is eliminated the conventional complicated assembling work of fastening the motor base plate to the frame by means of screws. This facilitates the automatic assembling work of music boxes.

### BRIEF DESCRIPTION OF THE DRAWINGS

Fig.1 is a sectional side elevation view of a small brush-use DC motor;
Fig. 2 is a plan view showing the DC motor of Fig. 1;
Fig .3 is a perspective view showing an armature;
Fig. 4 is a sectional side elevation view of a small brush-use DC motor according to an embodiment of the present invention;
Fig. 5 is a enlarged sectional view showing a portion including a shaft and a bearing in the DC motor of the embodiment;
Fig. 6 is a enlarged sectional view showing a modification of the portion including a shaft and a bearing in the DC motor of the embodiment.
Fig. 7 is a sectional side elevation view of a small brush-use DC motor according to another embodiment of the present invention;
Fig. 8 is a plan view showing a motor-driven music box according to a further embodiment of the present invention.
Fig. 9 is a cross sectional view taken on line A - A in Fig. 8.
Fig. 10 is a cross sectional view showing only the frame of the music box;
Fig. 11 (a) and (b) are plan and cross sectional views of a music box similar to the embodiment of the present invention;
Fig. 12 (a) and (b) are plan and cross sectional views of a music box according to a still further embodiment of the present invention;
Fig. 13 (a) and (b) are plan and cross sectional views of a music box according to a still further embodiment of the present invention; and
Fig. 14 is a sectional side elevation view of a conventional small brush-use DC motor.

### DETAILED DESCRIPTION OF THE PREFERRED EMBODIMENTS

At first an embodiment similar to that of the present invention will be described to explain certain features of the motor of the present invention.

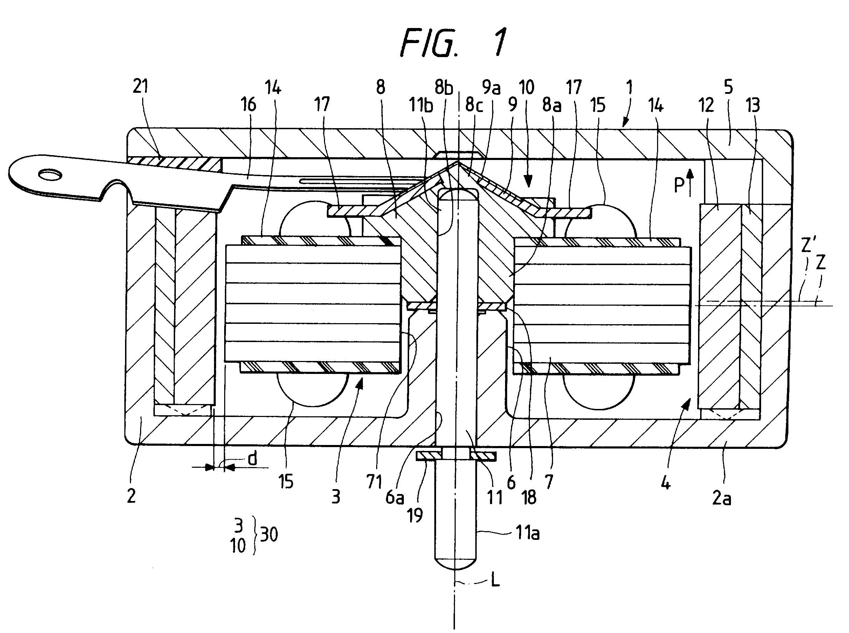

In Fig. 1, reference numeral 1 designates a small DC motor 1 with the brush. As shown, an armature 30 and a stator section 4 are contained in a first stator case 2 of the DC motor 1. A cover 5 as a second stator case is placed on the stator case 2 containing those components for concealing them.

The armature 30 is constructed such that a rotor section 3 and a commutator unit 10 are mounted on a rotary shaft 11.

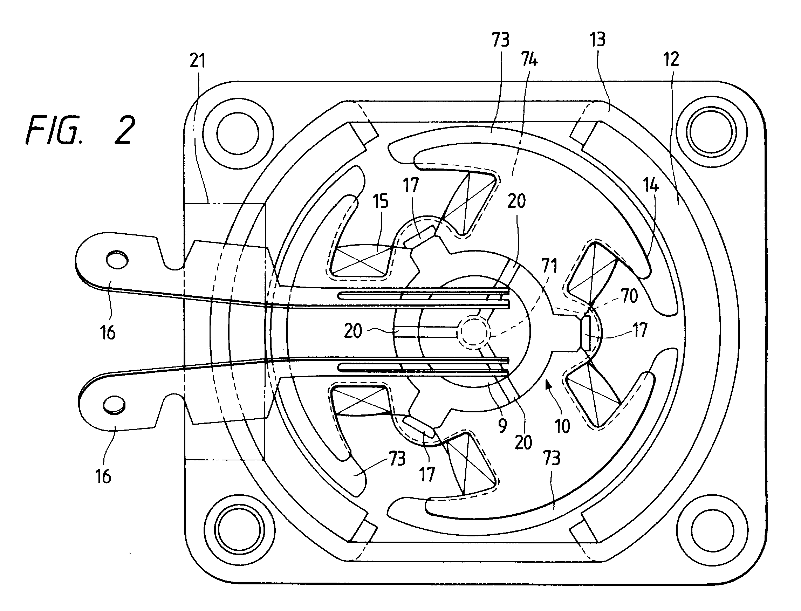

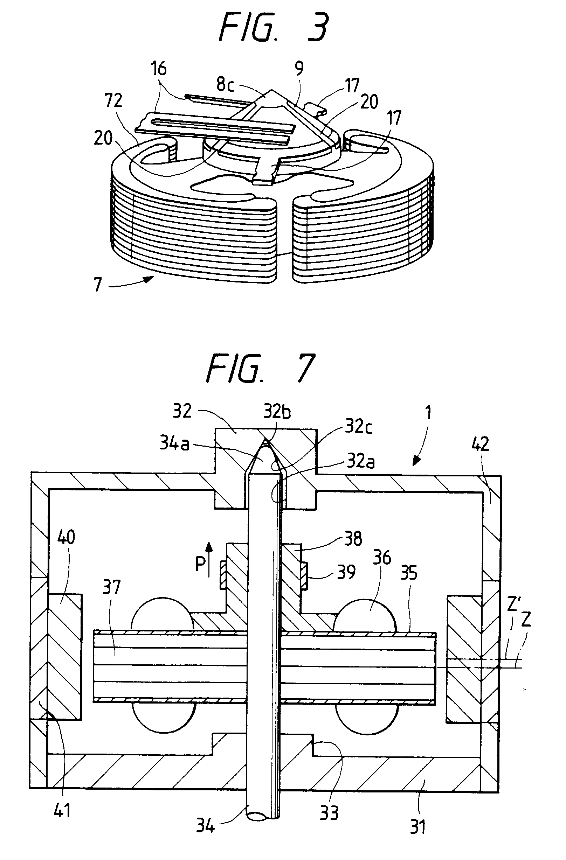

The rotor section 3 includes a rotor core 7, an insulating layer 14 and a winding 15. A plurality of silicone steel plates with excellent magnetic characteristics are laminated into the rotor core 7. As shown in Figs. 2 and 3, a ring-like member 70 is centered in the rotor core 7. A center hole 71 is formed in the central part of the ring-like member 70. A plural number of poles 72 extends radially from the ring-like member 70.

The three poles 72 radially extend in the three directions, as shown in Figs. 2 and 3. As a matter of course, the number of poles 72 are not limited to three.

Each pole 72 includes an arcuately outward curved, umbrella part 73, and a rib 74 which narrower than the umbrella part 73 and extends between the side plate 73 and the ring-like member 70. A predetemined number of turns of windings 15 are wound on each rib 74 with an insulating layer 14 being interposed between them. The insulating layer 14 is provided in order to prevent the turns of the winding from shorting through the rotor core 7. If the winding shorts, the motor fails to operate (or it cannot be driven).

The commutator unit 10 includes a commutator holder 8 and a commutator 9. A bearing portion 6 is upward raised from the central part of the bottom 2a of the first stator case 2. The rotary shaft 11 is rotatably inserted in a hole 6a of the bearing portion 6 in such a manner that the free end 11a of the rotary shaft 11 is extended outside the stator case 2, from the bearing hole 6a. A boss 8a of the commutator holder 8, which supports the commutator 9, is fit into the center hole 71 of the ring-like member 70 of the rotor core 7.

A washer 18 is inserted between the bottom surface of the boss 8a and the top surface of the bearing portion 6. The base end 11b of the rotary shaft 11 is press fit into a hole 8b with the bottom of the boss 8a. With this, the commutator holder 8 and the rotary shaft 11 are coupled into a one-piece construction. The commutator holder and the rotary shaft 11 are integrally rotated together.

The commutator holder 8 includes a conical part 8c, as shown in Figs. 2 and 3. The commutator 9, which consists of conical members of which the vertices lie on the axial line of the rotary shaft 11, is formed on the conical part 8c of the commutator holder 8 by the insert molding.

The commutator 9, which is for changing the direction of the current flowing through the winding 15, consists of three segments separated by grooves 20, which are formed by a suitable cutting means, not shown, such as a cutter.

A pair of brushes 16 are brought into contact with the surface 9a of the commutator 9. The paired brushes 16 are held by a holder member 21, which is fixed to the inner side of the cover 5, and are connected to a power source, not shown.

The paired brushes 16, which feed current from the power source to the commutator 9, are set to the holder member 21 at the same inclination as that of the conical surface 9a of the commutator 9 by the insert molding. Accordingly, when the cover 5 is mounted on the first stator case 2, the paired brushes 16 come in contact with the commutator 9 while applying a present pressure on the commutator 9.

Three electrode terminals 17, which extend radially from the commutator holder 8 in three directions, are arranged around the commutator 9. Each of the terminals 17 is connected to the winding 15, which consists of the predetermined number turns of wires on the rotor core 7.

Arcuate magnets 12 are disposed around the rotor core 7. Each magnet 12 is fastened to the first stator case 2 while a yoke 13 as a part of the stator section 4 is interposed therebetween.

The stator section 4 includes the yokes 13 fastened to the stator case 2 and the magnets 12. The stator section 4 is disposed coaxial with the rotary shaft 11 in a state that the magnet 12 is separated from the rotor core 7 by a predetermined air gap d.

The center plane Z of the rotor section 3 as viewed in the direction of the axis of rotation is staggered with respect to the magnetic center plane Z' of the magnet 12 as viewed also in the direction of the axis of rotation, as shown in Fig. 1. In the illustration of Fig. 1, the magnetic center plane Z' is higher than the center plane Z. At the magnetic center plane Z', the maximum gap magnetic flux density is produced.

With this arrangement, the rotor core 7 is constantly biased toward the magnetic center plane Z', i.e., in the direction P of an arrow, by a magnetic force attraction by the magnets 12. As a result, a clearance between the rotary shaft 11 and the bearing portion 6 is minimized, allowing a smooth rotation of the motor and hence reducing motor noise.

The magnetic attraction force in the direction P is selected to such an extent that it is little effected by a centrifugal force of the motor when it is rotating. Accordingly, since the clearance between the rotary shaft 11 and the bearing portion 6 is minimized, a smooth rotation of the motor is secured.

Further, a magnetic attraction force by the magnet 12 acts on the rotor section 3, to move the rotor section 3 in the direction P or upward. Accordingly, the rotor section 3 rotates while floating from the washer 18 toward an upper side of the first stater case 2.

Reference numeral 19 designates a snap ring 19. The operation of the brush-use DC motor thus constructed will be described.

Upon power on, current flows through a pair of brushes 16 and the commutator 9 into the winding 15. As a result, the rotor core 7 is magnetized. At this time, the direction and phase of the flowing current are switched by the commutator 9, so that the polarities of the magnetic poles formed vary. The rotor section 3 repels the magnetic field developed by the magnet 12 thereby to turn. With the turn of the rotor section 3, the rotary shaft 11 rotates.

In the DC motor, the conical commutator 9 whose vertex lies on the axial line of the rotary shaft 11 is disposed on the conical part 8c of the commutator holder 8. The hole 8b with the bottom, which supports the rotary shaft 11, is formed in the boss 8a of the commutator holder 8. This construction reduces the axially extending space occupied by the commutator 9, so that the DC motor 1 can be flattened.

It is noted here that because of the conical shape of the commutator 9, the angle of relief of the cutter can be reduced when the grooves 20 are formed in the surface 9a by the cutter, and further the radial extension of the commutator 9 can be reduced. The result is to reduce the peripheral speed of the commutator 9 and to secure the contact area of the brushes 16 and the commutator 9.

In the conventional DC motor of this type, the commutator unit is shaped tubular or like a disk, and the surface of the commutator unit is divided into segments corresponding to the number of poles by grooving the surface by means of a cutter.

If the commutator unit has three poles, the surface of the commutator unit is grooved at locations angularly separated by 120° by means of a cutter.

If the commutator unit is shaped tubular, the cutter or the commutator unit is moved for forming grooves. Accordingly, the groove forming work can be smoothly carried out. To form grooves in the disk-like commutator unit, the relief for the cutting edge of the cutter must be formed at the central part of the commutator unit since the cutting edge is circular. This limits the reduction of the radial size of the commutator unit. Attempt to make the contact area of the brushes equal in size to the commutator unit results in increase of the radial size. Accordingly, the peripheral speed of the commutator unit increases, causing noise.

In this DC motor, the brushes 16 are previously fastened to the holder member 21 of the cover 5. In assembling the motor, the brush 16 and the commutator 9 are mutually positioned as intended by merely fixing first the rotor section 3 and then the cover 5 to the stator case 2. In this respect, the assembling work of the motor is improved.

A preferred embodiment of the present invention will be described.

In the description of the embodiment, like reference numerals will designate like or equivalent portions in the motor described hereinbefore.

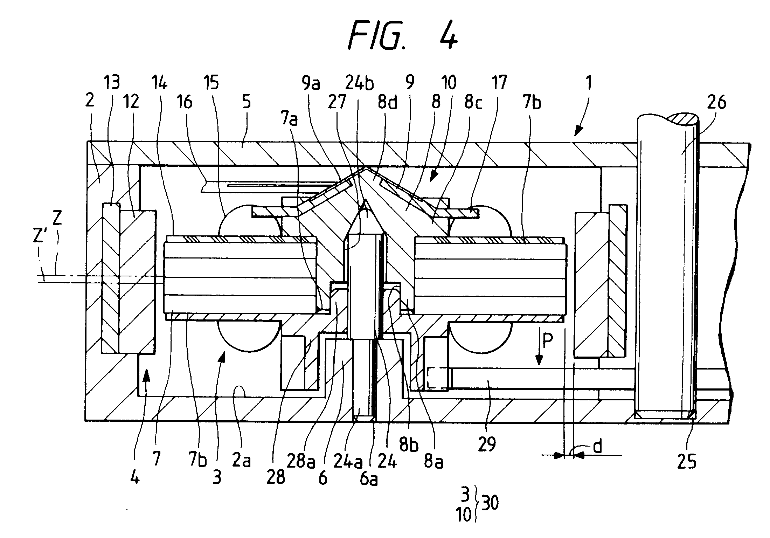

While the rotary shaft 11 rotates together with the armature 30 in the motor described before, a shaft 24 is fixed in a small brush-use DC motor 1 of the second embodiment, as shown in Fig. 4.

The embodiment improves the support structure of the armature 30 of the DC motor 1, more specifically the structure including the support shaft for rotatably supporting the armature 30, and the bearings.

As shown, the armature 30 and a stator section 4 are contained in a first stator case 2 of the DC motor 1 of the second embodiment. A cover 5 as a second stator case is placed on the stator case 2 containing those components for concealing them. As shown, a (first) bearing portion 6 is upward raised from the bottom 2a of the first stator case 2 and a thrust bearing 25 is formed in the stator case 2.

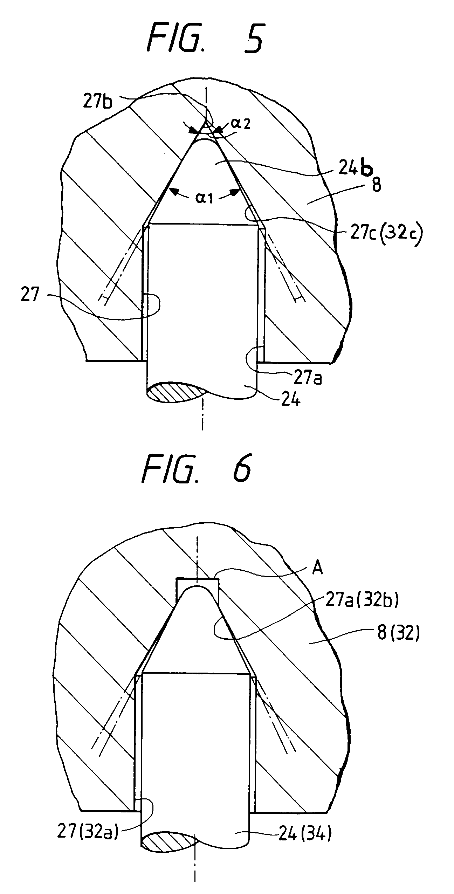

The armature 30 is constructed such that a rotor section 3 and a commutator unit 10 are rotatively mounted on a rotary shaft 24. The shaft 24, shaped tubular, consists of two portions of different diameters. The lower portion 24a is smaller in diameter than the other portion (the lower portion 24a of the shaft 24 is closer to the bottom 2a of the stator case 2 and its bottom end is guided into the bearing portion 6). The distal end part 24b (of the other portion of the shaft 24 located closer to the cover 5) is shaped conical, as shown in Figs. 5 and 6. The apex of the conical, distal end part 24b is spherical in shape. Oblique lines of both sides of the conical end part 24b when viewed in cross section intersect at an angle α1.

The bottom end of the lower portion 24a of the shaft 24 is press fit into the hole 6a of the (first) bearing portion 6, thereby to be fixed to the first stator case 2.

A plurality of silicone steel plates with excellent magnetic characteristics are laminated into the rotor core 7. The shape of the rotor core 7 is the same as that of the rotor core in the motor described before. Hence, no further description of the rotor core will be given.

A commutator holder 8 with a flange 8c is inserted into a hole 7a formed in the central part of the rotor core 7. The commutator holder 8 for supporting the commutator 9 is fit into the commutator 9. A concave portion 8b' is formed in the bottom end 8a of the commutator holder 8, which is located within the hole 7a of the rotor core 7. The top end of the commutator holder 8 is shaped into a conical part 8d. The commutator 9, which consists of conical members of which the vertices lie on the axial line of the rotary shaft 24, is fixed to the conical part 8d of the commutator holder 8. T h e commutator 9 is for changing the direction of the current flowing through the winding 15. A pair of brushes 16, which are connected to a power source, not shown, are brought into contact with the surface 9a of the commutator 9.

The circumferential fringe 9b of the commutator 9 is extended beyond the commutator holder 8.

The cross section of a hole 27 formed in the commutator holder 8 and serving as a second bearing portion is as illustrated in Fig. 5. The diameter of the lower part 27a of the hole 27 is slightly larger than that of the shaft 24. The hole 27 of which the upper part 27b is conically shaped, has a tapered side wall 27c. In the cross section of the hole 27, two oblique lines of the side wall 27c intersect at an angle a2 on the axial line of the shaft 24.

The conical angle α2 is slightly larger than the conical angle al of the conical end part 24b of the shaft 24, to produce a difference (α2 - α1). A boss 28a of a gear 28 made of insulating material is press fit into the concave portion 8b' of the commutator holder 8, as shown in Fig. 4. The gear 28 is rotatively supported by the shaft 24.

Thus, the gear 28, the commutator holder 8 and the rotor core 7 are assembled into a single unit assembly. This assembly is rotatively supported by the shaft 24. The winding 15 is placed on the the rotor core 7, with an insulating layer 14 interposed therebetween. Arcuate magnets 12 are disposed around the rotor core 7. Each magnet 12 is fastened to the first stator case 2 while a yoke 13 is interposed therebetween.

The stator section 4 is disposed coaxial with the rotary shaft 24 in a state that the magnet 12 is separated from the rotor core 7 by a predetermined air gap d.

As in the motor described before, the center plane Z of the rotor core 7 as viewed in the direction of the axis of rotation is staggered with respect to the magnetic center plane Z' of the magnet 12 as viewed also in the direction of the axis of rotation, as shown in Fig. 4. In the illustration of Fig. 4, the magnetic center plane Z' is higher than the center plane Z. At the magnetic center plane Z', the maximum gap magnetic flux density is produced.

With this arrangement, the rotor core 7 is constantly biased toward the magnetic center plane Z', i.e., in the direction P of an arrow, by a magnetic force attraction by the magnets 12. As a result, a clearance between the rotary shaft 24 and the bearing portion 6 is minimized, allowing a smooth rotation of the motor and hence reducing motor noise.

The magnetic attraction force in the direction P is selected to such an extent that it is little effected by a centrifugal force of the motor when it is rotating. Accordingly, since the clearance between the rotary shaft 24 and the bearing portion 6 is minimized, a smooth rotation of the motor is secured.

The shaft 26, through which the rotation force of the DC motor 1 is output, is rotatively supported by the thrust bearing 25 of the stator case 2 and the cover 5 as the second stator case.

An output gear 29 is fastened to the output shaft 26. The output gear 29 is in mesh with the gear 28 fastened to the rotor core 7. Through the output gear 29, the rotation force of the rotor section 3 is transmitted to the output shaft 26.

In the embodiment, the upper part 27b of the hole 27 for supporting the shaft 24 is shaped conically. Alternately, a hollow A may be formed at the apex of the hole 27, as shown in Fig. 6. What is essential is that conical hole has the side wall tapered at the angle α2, which is larger than the angle al of the apex of the shaft 24.

The operation of the brush-use DC motor thus constructed will be described.

Upon power on, current flows through the paired brushes 16, the commutator 9 into the winding 15. As a result, the rotor core 7 is magnetized. At this time, the direction and phase of the flowing current are switched by the commutator 9, so that the polarities of the magnetic poles formed vary. The rotor section 3 repels the magnetic field developed by the magnet 12 thereby to turn.

The magnetic attraction force by the magnet 12 acts on the rotor section 3 to press the rotor section 3 in the direction P of an arrow or downward in the stator case 2. The rotor section 3 rotates in a state that the tapered side wall 27c of the hole 27 is pressed against the conical surface of the distal end part 24b of the shaft 24. With the rotation of the rotor section 3, the output shaft 26 is rotated through the gear 28 and the output gear 29.

As stated above, the angle α2 of the tapered side wall 27c of the hole 27 is slightly larger than the angle al of the distal end part 24b of the shaft 24. Therefore, the tapered side wall 27c contacts with the conical surface of the distal end part 24b linearly, not aerially when the former is pressed against the latter by the magnetic force.

With such a structure, a play of the rotor section 3 in the radial direction is reduced. Since the shaft 24 linearly contacts with the hole 27, the frictional resistance of rotation is reduced.

Another construction of the embodiment resides in that the hole 27 as a bearing is formed in the commutator holder 8. Because of this, the DC motor can be flattened when comparing with the conventional DC motor in which the bearings are formed at the upper and lower locations of the stator case 2.

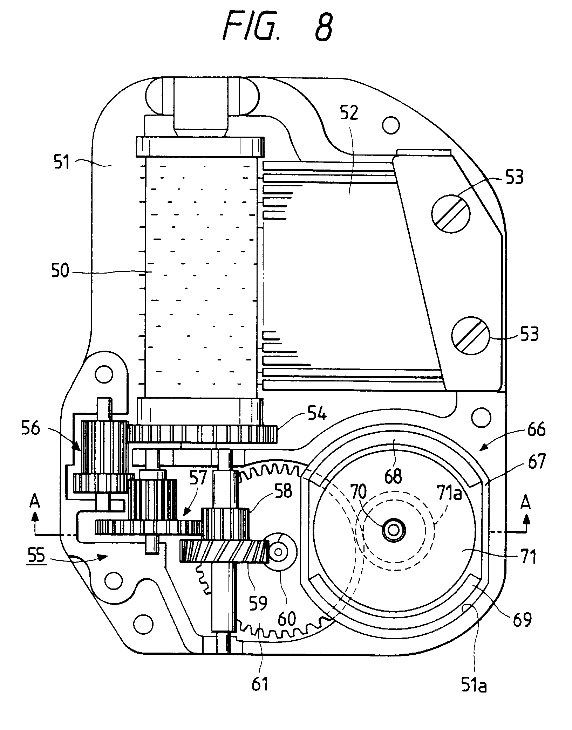

Fig. 7 is another embodiment of the present invention. In this embodiment like the motor described at the beginning, a small brush-use DC motor of the type in which the shaft is rotatable, is handled. This embodiment is different from the motor referred to above in that a bearing for supporting the rotary shaft is formed in the cover as the second stator case.

In Fig. 7, first and second bearing portions 32 and 33 are respectively formed in a first stator case 30 and a cover 31 as a second stator case. A rotary shaft 34 is rotatively supported by the first and second bearing portions 32 and 33.

A concavity 32a is formed in the first bearing portion 32. The shape of the concavity 32a is shaped like that of the previous embodiment.

The cross section of the hole 32 is as illustrated in Fig. 6. The diameter of the lower part 32a of the hole 32 is slightly larger than that of the shaft 34. The hole 32 of which the upper part 32b is conically shaped, has a tapered side wall 32c. In the cross section of the hole 32, two oblique lines of the side wall 32c intersect at an angle α2 on the axial line of the shaft 34.

As shown in Fig. 6, the angle α2 (Fig. 5) is somewhat larger than the angle α1 of the conical lower portion 24b of the shaft 24 so as to produce a difference (α2 - α1).

A winding 36 is wound on a rotor core 37 while an insulating layer 35 is interlayered between them. A tubular commutator 38 is fastened to the upper part of the rotor core 37. A brush 39 is brought into press contact with the tubular commutator 38.

A magnet 40 is fastened to a first stator case 42, with a yoke 41 intervening therebetween. The magnet 40 is coaxial with the rotary shaft 34 around the rotor core 37.

In the thus constructed support structure for the rotary shaft, when the rotor core 37 rotates, the rotary shaft 34 rotates together therewith.

The rotary shaft 34 rotates in a state that, as in the second embodiment, one end 34a of the rotary shaft 34 is brought into press contact with the lower part 32a of the first bearing portion 32 by the magnetic force developed by the magnet 40. Thus, the rotary shaft 34 rotates in a state that it linearly contacts with the first bearing portion. A play of it in the radial direction is reduced.

As seen from the foregoing description, in the DC motors of the embodiments, the clearance between the shaft and the bearing is reduced to a minimum. And those contact with each other linearly. The armature can be turned smoothly, and the motor noise is reduced.

With the conical shape of the commutator, the space of the motor assembly can be reduced in the axial direction when compared with the conventional one. The result is to reduce noise, to be flattened in shape, and to provide an easy assembling work.

An embodiment of the present invention in which the DC motor of each of the previously described embodiments is applied to a music box.

In the music box, called a motor-driven music box, the small DC motor constructed as described above, is used to drive a rotary drum for striking vibrating plates by way of a reduction gear train.

In Fig. 8, reference numeral 50 designates a well rotary drum rotatively supported at both ends thereof by a frame 51. A number of tuned vibrating plates 52, arranged side by side, are fastened to the frame 51 by means of screws. The rotary drum 50 stands in front of the vibrating plate 52. A number of pegs or pins in the surface of the rotary drum 50 strike the tips of the vibrating plates 52 to produce music.

A drum gear 54 is fixed to the bottom end (as viewed in the drawing) of the rotary drum 50. The drum gear 54 meshes with a final gear 56 of a reduction gear train 55.

The reduction gear train 55 consists of a gear 57, a gear 58, a worm gear 59 integral with the gear 58, a worm 60, and a gear 61 integral with the worm 60. The gear 61 is in mesh with a motor gear 71a of an armature 71 of a small brush-use DC motor 66.

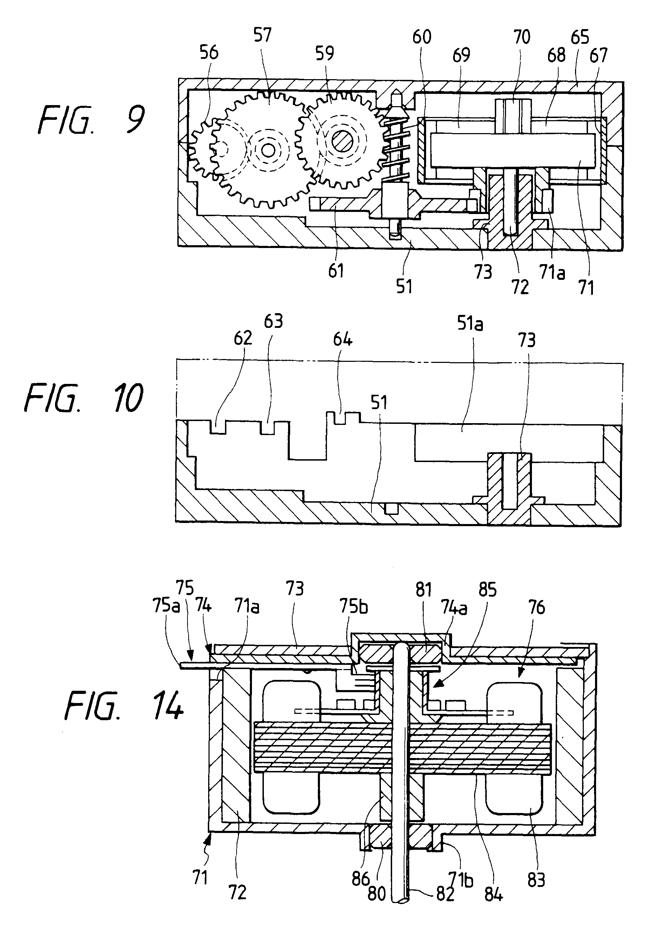

The gears 56, 57, 58, and 59 are supported at both ends thereof in bearing indents 62, 63 and 64 which are opened upward (Fig. 10). The gears 56, 57, 58, and 59 may be assembled by merely putting down those gears into those upward open bearing indents of the frame 51. The worm 60 is supported at one end by the frame 51 and at the other end by a cover 65, which serves as a second stator case. The small brush-use DC motor 66 is located at the lower right corner (as viewed in the drawing) of the frame 51 (Fig. 8).

The DC motor 66 is composed of a yoke 67, a pair of magnets 68 and 69 supported by the yoke 67, the armature 71 with a commutator 70, and a brush (not shown) coming in contact with the commutator 70. The yoke 67 is set in a recess 51a (Figs. 8 and 10) of the frame 51 in such a state that about 2/3 of the circumferential side of the yoke 67 is surrounded by the recess.

Although not shown, the base of the brush of the DC motor 66 is fastened to the cover 65. The armature 71 is supported by the frame 51 such that a shaft 72 (rotatable in one embodiment) of the armature 71, which is to be orthogonal to the frame 51, is put down into a tubular bearing 73 of the frame 51, as the reduction gear train 55.

In assembling the DC motor 66, the yoke 67 having magnets 68 and 69 fastened to the inner side of the yoke is put down into the recess 51a of the frame 51. Then, the shaft 72 of the commutator 70 is merely put into the bearing 73. Finally, the cover 65 with the brush is applied to the frame 51 so that the brush comes in contact with the commutator 70.

In the embodiment illustrated, the tubular bearing 73 is provided separately from the frame 51, but it may be formed integral with the frame 51.

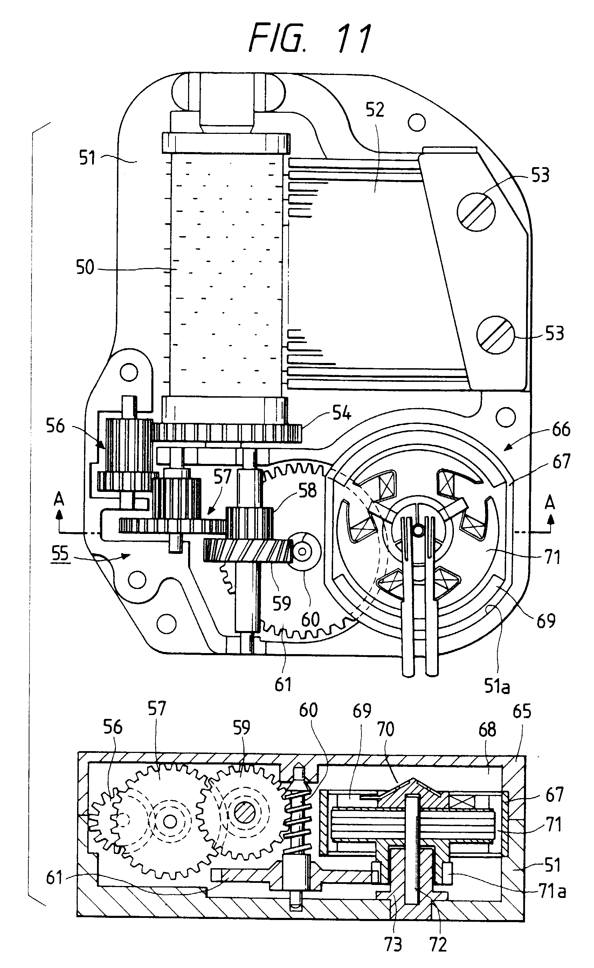

A music box similar to that of the present invention is illustrated in Fig. 11.

The construction of this music box is substantially the same as that of the music box described before except that the commutator unit of the conical structure is employed in the small brush-use DC motor. This type of the commutator unit is as described in detail in the motor at the beginning of the detailed description.

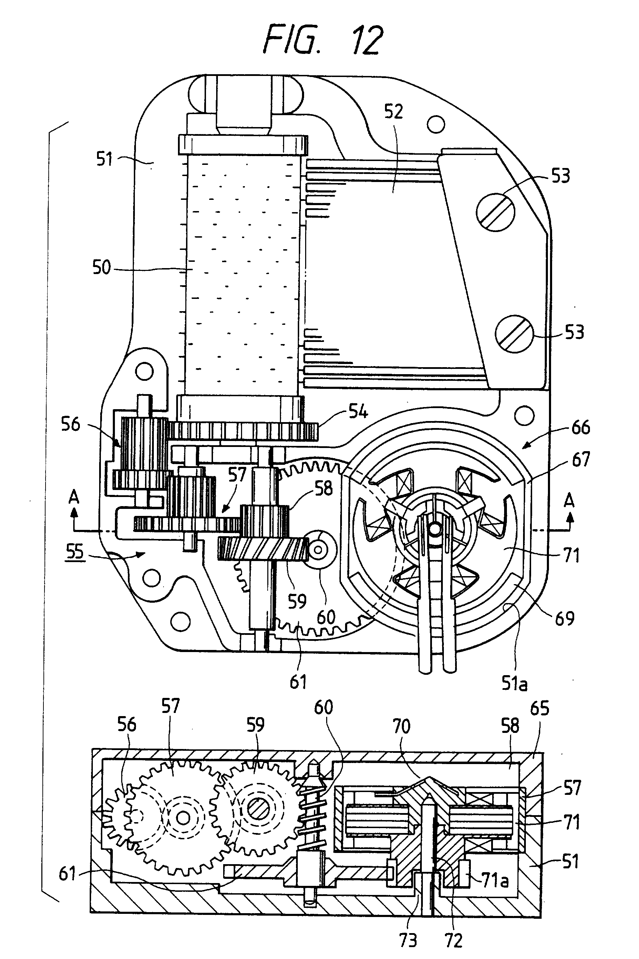

A music box according to a further embodiment of the present invention is illustrated in Fig. 12.

The construction of this music box is substantially the same as that of the music box described above except that the commutator unit of the conical structure is employed in the small brush-use DC motor, and the shaft for supporting the commutator unit is also shaped conical. This type of the commutator unit is as described in detail in connection with the embodiment of Fig. 4.

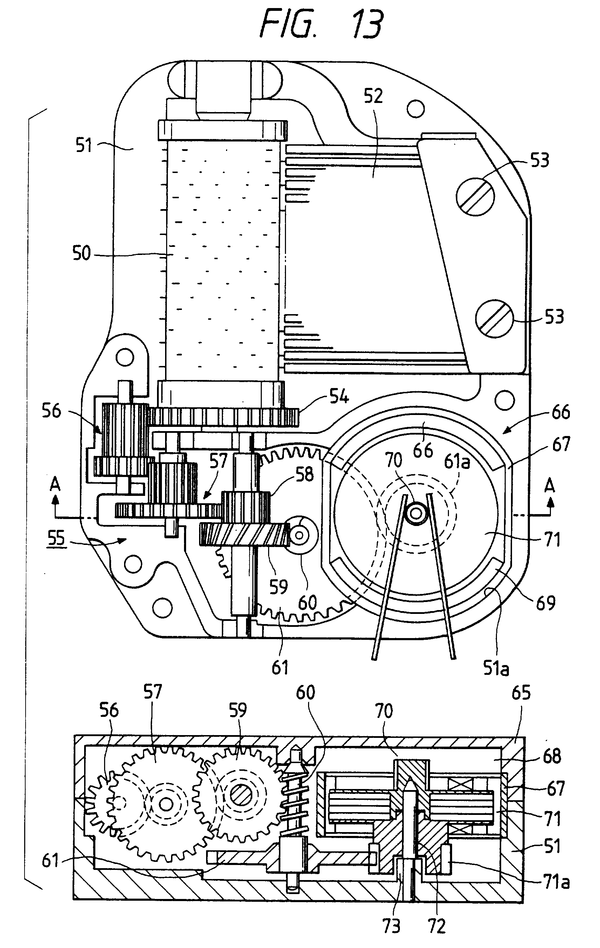

A music box according to a still further embodiment of the present invention is illustrated in Fig. 13.

The construction of this music box is substantially the same as that of the music box described above except that the commutator unit of the tubular structure is employed in the small brush-use DC motor, and the shaft for supporting the commutator unit is shaped conical. This type of the commutator unit is as described in detail in connection with the embodiment of Fig. 7.

As seen from the foregoing description, the music boxes of the invention employ the small brush-use DC motors of the invention. Those DC motors as the drive sources for the rotary drums are each mounted on the frame as referred to above. The shafts of the DC motors are disposed orthogonal to the frames. Therefore, the DC motors can be readily assembled by merely putting the shafts into the bearing indentations of the frames. Therefore, there is eliminated the conventional complicated assembling work of fastening the motor base plate to the frame by means of screws. This facilitates the automatic assembling work of music boxes.

## Claims

1. A small brush-use DC motor comprising:
a stator member (4) including a stator case (2) in which a magnet (12) is disposed;
a rotor member (3) including a rotor core (7) on which a coil (15) is wound, a magnetic center (Z) of the rotor core (7) being staggered with respect to a magnetic center (Z') of the magnet (12);
a commutator unit (10) having a conical part (8b) on which a commutator (9) is arranged, the commutator unit (10) rotating together with the rotor member (3) as a single unit assembly;
brushes (16) held in such a manner that the brushes are brought into contact with the commutator (9) under a predetermined pressure;
a support shaft (24) fixed to the stator case (2) and having a distal end part (24b) shaped substantially conical; and
a bearing portion (27) which is a substantially conically shaped hole provided in the commutator unit (10) and receiving said conical end (24b) of the support shaft (24), thereby rotatably supporting said single unit assembly of the rotor member (3) and the commutator unit (10).

2. The small brush-use DC motor as claimed in claim 1, wherein the conical angle α1 defined at the conical end part of the support shaft (24) is smaller than the conical angle α2 defined at the conical hole of the bearing portion (27).

3. The small brush-use DC motor as claimed in claim 1 or 2, wherein the magnetic center (Z) of the rotor core (7) is staggered with respect to the magnetic center (Z') of the magnet (12) such that an urged direction of the rotor core by a magnetic attraction force of the magnet (12) is the same direction in which the predetermined pressure is applied when the brushes (16) are brought into contact with the commutator (9).

4. A music device comprising:
a rotary drum (50) having a plurality of pins arranged in the surface thereof in accordance with a music piece;
a plurality of vibrating plates (52) sounded by the pins of the rotary drum (50);
a small brush-use DC motor (66) according to any one of claims 1 to 3, for driving the rotary drum (50) through a reduction gear train (55); and
a frame (51) for supporting the rotary drum (50), the vibrating plates (52), the reduction gear train (55), and the small brush-use DC motor (66), wherein the small brush-use DC motor (66) being supported by the frame (51) in such a manner that the support shaft (24) for supporting the rotor member of the small brush-use DC motor (66) and the commutator unit is orthogonal to the frame (51) to support the small brush-use DC motor (66).

5. The music device as claimed in claim 4, wherein one end of the shaft (24) for supporting the rotor member of the small brush-use DC motor (66) and the commutator unit thereof is fixed to the frame (51).

## Patentansprüche

1. Kleiner Gleichstrommotor mit Bürsten, umfassend:
ein Statorelement (4) mit einem Statorgehäuse (2), in welchem ein Magnet (12) angeordnet ist,
ein Rotorelement (3) mit einem Rotorkern (7), auf den eine Spule (15) gewickelt ist, wobei ein magnetisches Zentrum (Z) des Rotorkerns (7) in bezug auf ein magnetisches Zentrum (Z') des Magneten (12) versetzt ist,
eine Kommutatoreinheit (10) mit einem konischen Teil (8b), auf dem ein Kommutator (9) angeordnet ist, wobei sich die Kommutatoreinheit (10) zusammen mit dem Rotorelement (3) als eine einheitliche Baueinheit dreht,
Bürsten (16), die so gehalten sind, daß die Bürsten unter einem vorbestimmten Druck mit dem Kommutator in Kontakt gebracht sind,
eine am Statorgehäuse (2) befestigte Lagerachse (24) mit einem im wesentlichen konisch ausgebildeten, distalen Endteil (24b), und
einen Lagerabschnitt (27), der eine in der Kommutatoreinheit (10) vorgesehene, im wesentlichen konisch ausgebildete und das konische Ende (24b) der Lagerachse (24) aufnehmende Bohrung ist, wodurch die einheitliche Baueinheit aus dem Rotorelement (3) und der Kommutatoreinheit (10) drehbar gelagert ist.

2. Kleiner Gleichstrommotor mit Bürsten gemäß Anspruch 1, wobei der am Endteil der Lagerachse (24) festgelegte Konuswinkel α1 der Lagerachse (24) kleiner ist als der an der konischen Bohrung des Lagerabschnitts (27) festgelegte Konuswinkel α2.

3. Kleiner Gleichstrommotor mit Bürsten gemäß Anspruch 1 oder 2, wobei das magnetische Zentrum (Z) des Rotorkerns (7) in bezug auf das magnetische Zentrum (Z') des Magneten (12) so versetzt ist, daß eine Vorbelastungsrichtung des Rotorkerns aufgrund einer magnetischen Anziehungskraft des Magneten (12) die gleiche Richtung ist, in welcher der vorbestimmte Druck ausgeübt wird, wenn die Bürsten (16) mit dem Kommutator (9) in Kontakt gebracht sind.

4. Musikgerät, umfassend:
eine rotierbare Trommel bzw. Drehwalze (50) mit einer Vielzahl von Stiften, die in ihrer Oberfläche entsprechend einem Musikstück angeordnet sind,
eine Anzahl von schwingenden Platten bzw. Zungen (52), die durch die Stifte der Drehwalze (50) zum Klingen gebracht werden,
einen kleinen Gleichstrommotor (66) mit Bürsten gemäß einem der Ansprüche 1 bis 3 zum Antreiben der Drehwalze (50) über ein Untersetzungs(zahnrad)getriebe (55), und
einen Rahmen (51) zum Haltern bzw. Lagern der Drehwalze (50), der schwingenden Platten bzw. Zungen (52), des Untersetzungs(zahnrad)getriebes (55) und des kleinen Gleichstrommotors (66) mit Bürsten, wobei der kleine Gleichstrommotor (66) mit Bürsten durch den Rahmen (51) so gehaltert ist, daß die Lagerachse (24) zum Lagern des Rotorelements des kleinen Gleichstrommotors (66) mit Bürsten und der Kommutatoreinheit orthogonal bzw. rechtwinklig zum Rahmen (51) liegt, um den kleinen Gleichstrommotor (66) mit Bürsten zu lagern bzw. zu haltern.

5. Musikgerät gemäß Anspruch 4, wobei ein Ende der Achse (24) zum Lagern des Rotorelements des kleinen Gleichstrommotors (66) mit Bürsten und von dessen Kommutatoreinheit am Rahmen (51) befestigt ist.

## Revendications

1. Petit moteur à courant continu à balais, comprenant :
un organe de stator (4) comprenant un boîtier de stator (2) dans lequel est disposé un aimant (12),
un organe de rotor (3) comprenant un noyau de rotor (7) sur lequel est enroulée une bobine (15), un centre magnétique (Z) du noyau de rotor (7) étant décalé par rapport au centre magnétique (Z') de l'aimant (12),
une unité à collecteur (10) ayant une partie conique (8b) sur laquelle est placé un collecteur (9), l'unité à collecteur (10) tournant avec l'organe de rotor (3) comme un tout,
des balais (16) supportés de manière qu'ils soient mis au contact du collecteur (9) avec une pression prédéterminée,
un arbre de support (24) fixé au boîtier de stator (2) et ayant une partie d'extrémité externe (24b) de forme pratiquement conique, et
une partie (27) de palier qui a un trou de forme pratiquement conique formé dans l'unité à collecteur (10) et logeant l'extrémité conique (24b) de l'arbre de support (24), si bien que l'ensemble de l'organe de rotor (3) et de l'unité à collecteur (10) formant un tout est supporté en rotation.

2. Petit moteur à courant continu à balais selon la revendication 1, dans lequel l'angle de conicité α1 délimité par la partie d'extrémité conique de l'arbre de support (24) est inférieur à l'angle de conicité α2 délimité par le trou conique de la partie de palier (27).

3. Petit moteur à courant continu à balais selon la revendication 1 ou 2, dans lequel le centre magnétique (Z) du noyau de rotor (7) est décalé par rapport au centre magnétique (Z') de l'aimant (12) si bien que la direction de rappel du noyau de rotor par une force d'attraction magnétique de l'aimant (12) est la direction dans laquelle la pression prédéterminée et appliquée lorsque les balais (16) sont mis au contact du collecteur (9).

4. Dispositif à musique, comprenant :
un tambour rotatif (50) ayant plusieurs broches placées à sa surface en fonction d'un morceau de musique, plusieurs plaques vibrantes (52) émettant un son sous la commande des broches du tambour rotatif (50),
un petit moteur à courant continu (66) à balais selon l'une quelconque des revendications 1 à 3, destiné à entraîner le tambour rotatif (50) par l'intermédiaire d'un train d'engrenages réducteurs (55), et
un châssis (51) de support du tambour rotatif (50), des plaques vibrantes (52), du train d'engrenages réducteurs (55) et du petit moteur à courant continu (66) à balais, dans lequel le petit moteur à courant continu (66) à balais est supporté par le châssis (51) d'une manière telle que l'arbre (24) de support de l'organe de rotor du petit moteur à courant continu (66) à balais et de l'unité à collecteur est perpendiculaire au châssis (51) afin qu'il supporte le petit moteur à courant continu (66) à balais.

5. Dispositif à musique selon la revendication 4, dans lequel une première extrémité de l'arbre (24) de support de l'organe de rotor du petit moteur à courant continu (66) et de son unité à collecteur est fixée au châssis (51).
